# EUROPEAN PATENT SPECIFICATION

(11) **EP 2 886 573 B1**
(45) Date of publication and mention of the grant of the patent: **28.09.2016**
(21) Application number: 13198898.2
(22) Date of filing: 20.12.2013
(51) Int. Cl.: C08G 18/61, C08G 18/76, C08G 18/40

(54) **HYBRID MATERIAL AND PRODUCTION THEREOF**
HYBRIDMATERIAL UND SEINE HERSTELLUNG
MATÉRIAU HYBRIDE ET SON PROCÉDÉ DE PRODUCTION

(43) Date of publication of application: 24.06.2015
(73) Proprietor: Impact Protection Technology AG, 8001 Zürich (CH)
(72) Inventor: Zografou, Jason, 52064 Aachen (DE); Bünger, Daniel, 52072 Aachen (DE)
(74) Representative: Boult Wade Tennant

(56) References cited:
- EP-A2- 1 897 609
- WO-A1-2005/000966
- WO-A1-2009/129177
- WO-A1-2012/137020
- WO-A2-03/055339

## Description

### Field of the invention

The present invention relates to a method for producing a hybrid material (copolymer) comprising or consisting of the following steps: providing a first component comprising or consisting of one or more polyol(s) and one or more dilatant(s), wherein the one or more dilatant(s) comprises at least in part one or more amine group(s); providing a second component comprising one or more polyisocyanate(s); mixing the first and the second component to yield a reactive composition; curing the reactive composition to obtain the hybrid material. The present invention also relates to a hybrid material obtained or obtainable according to the method described above. The present invention further relates to an impact protection comprising or consisting of one or more hybrid material(s) described above. Moreover, the present invention relates to an object comprising one or more impact protection(s) described above, wherein the object is selected from the group consisting of devices of consumer electronics or parts thereof, in particular mobile devices such as mobile phones, tablets and notebooks, screenshields, electronic casing solutions, gaskets and protective inlays for electronic casings, protective parts and bumpers for devices and goods, electronics, personal protective gear and wear such as protectors, helmet pads, passenger protection in automotive, inlays for protective caps, transportation systems for critical goods.

### Description of the Prior Art

Conventionally, impact protection systems have employed, as the energy absorbing material, elastomeric foams or similar relatively soft, resiliently compressible materials. However, only limited protection is achieved thereby. In some systems, this energy absorbing material is employed in combination with a rigid member the purpose of which is to spread the impact force over a greater area and therefore reduce its effect. However, such systems tend to be inflexible and uncomfortable if in contact with a human body. Most vulnerable areas of the body which require protection, e. g. elbows and knees, undergo significant changes in geometry and thus any attempt to match a rigid load-spreading shape will usually fail. One solution is to introduce articulation into the rigid element but this can compromise performance and increases cost.

More recently, proposals have been made for the use of strain-rate sensitive shear thickening silicone putty materials, sometimes known as silicone dilatants, in or as energy absorbing materials in impact absorption systems. By a strain-rate sensitive shear thickening material or dilatant, we mean a material with viscous flows at low rates of strain deformation but, at an elevated strain rate of deformation undergoes a substantial increase in viscosity with rate of change of deformation. At significantly higher deformation rates, such as those induced by a sudden impact, the material becomes substantially stiff or rigid. For example, US-A-5599290 describes a bone fracture prevention garment which employs, as the dilatant or shear-thickening material, a dispersion of solid particles in a viscous fluid. GB-A-2349798 describes an energy absorbing pad including a putty-like dilatant.

WO 2012/1377020 discloses impact protection materials comprising an interpenetrating dilatant network.

However, in both cases, the dilatant has to be contained in an envelope because of its non self-supporting nature. The products therefore tend to have limited flexibility, are prone to damage by puncture, and require relatively complex and expensive manufacturing processes. These products also tend to be heavy due to the relatively high density of the dilatant, which can be above 1000 kg/m³, and suffer from migration of the dilatant within the envelope as the dilatant will exhibit viscous flow at even very low levels of loading. Other approaches for the utilisation of silicone dilatants have been to combine this material with a resilient carrier such as polyurethane foam.

WO 2005/000966 A1 discloses a composite material which is elastic, which exhibits a resistive load under deformation which increases with the rate of deformation, which is unfoamed or foamed, comminuted or uncomminuted and which comprises i) a first polymer-based elastic material and ii) a second polymer-based material, different from i), which exhibits dilatancy in the absence of i) wherein ii) is entrapped in a solid matrix of i), the composite material being unfoamed or, when foamed, preparable by incorporating ii) with i) prior to foaming.

According to Example 2 of WO 2005/000966 A1, however, the resulting composite material shows "poor adhesion between the two phases due to the presence of fissures at the interfaces between the phases".

Surprisingly, it has now been found that by using a dilatant material with amine-groups, which are able to react with the isocyante groups of a TPU- or PU-system in such a way that a covalent bonding is formed and a hybrid material is created, a new class of materials is obtained which offers the opportunity to avoid the disadvantages mentioned in WO 2005/000966 A1 for TPU and mentioned in EP 1 458 254 B1 and EP 1 832 186 B1 for PU.

The hybrid material of the present invention is suitable for reactive extrusion and reaction injection molding, as well a other reactive processing methods. The present invention thus provides a homogenous hybrid material offering easy processing combined with a better performance of resulting material.

### Summary of the invention

According to a first aspect of the present invention, a method is provided for producing a hybrid material (copolymer) comprising or consisting of the following steps: providing a first component comprising or consisting of one or more polyol(s) and one or more dilatant(s), wherein the one or more dilatant(s) comprises at least in part one or more amine group(s); providing a second component comprising one or more polyisocyanate(s); mixing the first and the second component to yield a reactive composition; curing the reactive composition to obtain the hybrid material.

According to another aspect of the present invention, a hybrid material is provided obtained or obtainable according to the method described above.

In a further aspect, the present invention relates to an impact protection comprising or consisting of one or more hybrid material(s) described above.

In yet a further aspect, the present invention relates to an object comprising one or more impact protection(s) decribed above, wherein the object is selected from the group consisting of devices of consumer electronics or parts thereof, in particular mobile devices such as mobile phones, tablets and notebooks, screenshields, electronic casing solutions, gaskets and protective inlays for electronic casings, protective parts and bumpers for devices and goods, electronics, personal protective gear and wear such as protectors, helmet pads, passenger protection in automotive, inlays for protective caps, transportation systems for critical goods.

### Description of figures

Figure 1 shows the preparation of a hybrid material according to the present invention.
Figure 2 shows the reaction scheme underlying the preparation of a hybrid material according to the present invention.

### Detailed description of the invention

According to a first aspect of the present invention, a method is provided for producing a hybrid material (copolymer) comprising or consisting of the following steps:
a. providing a first component comprising or consisting of one or more polyol(s) and one or more dilatant(s),
   wherein the one or more dilatant(s) comprises at least in part one or more amine group(s);
b. providing a second component comprising one or more polyisocyanate(s);
c. mixing the first and the second component to yield a reactive composition;
d. curing the reactive composition to obtain the hybrid material.

In case of only one dilatant being present in the first component, this dilatant must at least in part comprise one or more amine group(s). In case of more than one dilatant being present in the first component, it is sufficient that only one of these dilatants comprises at least in part one or more amine group(s).

### Polyol

Any of the polyols used in the preparation of flexible polyurethane foams can be employed in the practice of this invention. Suitable polyols are polyester polyols and polyether polyols of alkylene oxides with polyhydric compounds having from 2 to 8 active hydrogen atoms. Preferred polyester polyols are derived from fatty acids. Preferred polyols for this invention are polyether polyols having a hydroxyl number of 20 to 120. Examples of polyhydric compounds that are suitable as starting materials for making the polyether polyols comprise water, glycerol, trimethylolpropane, pentaerythritol, hexanetriol, hexitol, heptitol, sorbitol, mannitol, sucrose and amine compounds, for example, ethylene diamine, aminoethylpiperazine and the like, and mixtures of two or more such compounds. The alkylene oxide adducts of the polyhydric initiator can be prepared using techniques well-known to those skilled in the art of preparing polyether polyols.

Hydroxyl-functionalized polyacrylates may also be used in the practice of this invention.

The first component comprises one or a plurality of polyols. It is preferred that the first component comprises at least one polyether polyol which is nominally three functional. Optionally, the first component comprises a polyether polyol that contains primary hydroxyl groups from at least 20 to 90 percent of its total hydroxyl content, preferably from at least 40 to 90 percent of its total hydroxyl content. A representative example of such a polyether polyol is glycerine being alkoxylated with one or a combination of alkylene oxides including ethylene oxide and/or propylene oxide in a block or random manner so as to provide a polyether polyol containing at least 20 to 90 primary hydroxyl content, preferably at least 40 to 90 percent primary hydroxyl content, and having a hydroxyl number of from 20 to 120.

According to the present invention it is preferred that the one or more polyol(s) is/are selected from the group consisting of polyester polyols, polyether polyols and hydroxyl-functionalized polyacrylates.

### Dilatant

The present invention also relates to a dilatant comprising at least in part one or more amine group(s). For the preparation of a dilatant comprising at least in part one or more amine group(s) alpha,omega-hydroxy-terminated polydimethyl siloxane and a amine group containing silane, e.g. 3-aminopropylmethyldiethoxysilane, are mixed and heated up to form the non-Newtonian (NN). To include amine groups to the NN, 3-aminopropylmethyldiethoxysilane is added to alpha,omega-hydroxy-terminated polydimethyl siloxane, preferably at a ratio of 1:20, and alpha,omega-hydroxy-terminated polydimethyl siloxane, 3-aminopropylmethyldiethoxysilane and boric acid are mixed together. With addition of water compound 3-aminopropylmethyldiethoxysilane is hydrolysed. The *in situ* formed Si-OH groups can take place in a crosslinking reaction with boric acid or alpha,omega-hydroxy-terminated polydimethyl siloxane.

In an embodiment according to the present invention, the released water from the condensation reaction between alpha,omega-hydroxy-terminated polydimethyl siloxane and boric acid is sufficient to completely hydrolyse 3-aminopropylmethyldiethoxysilane, so that alpha,omega-hydroxy-terminated polydimethyl siloxane, 3-aminopropylmethyldiethoxysilane and boric acid are simply mixed together.

According to the present invention it is preferred that the molar ratio between polyol(s) and dilatant(s) in step a. is within the range of 9 to 1, more preferably within the range of 3 to 1.

### Polyisocyanate

The first component is reacted with a second component comprising one or more polyisocyanate(s), wherein preferably the ratio of isocyanate groups of the polyisocyanate(s) to the active hydrogen atoms of the first component is 0.8:1 to 1.3:1, and more preferably from 0.9:1 to 1.25:1. At lower ratios of polyisocyanate inadequate curing is achieved and at higher ratios the desirable foam physical properties are not achieved. It is noted that the optimum amount of polyisocyanate(s) varies with the prevailing weather conditions, particularly temperature and humidity. In conditions of high humidity, polyisocyanate consumption is greater and so slightly larger volumes of polyisocyanate(s) are required to produce foams of good quality at a constant ratio.

Suitable polyisocyanates include aromatic, aliphatic and cycloaliphatic polyisocyanates and combinations thereof. Representative examples are diisocyanates such as m-phenylene diisocyanate, 2,4-toluene diisocyanate, 2,6-toluene diisocyanate, mixtures of 2,4-toluene diisocyanate and 2,6-toluene diisocyanate, hexamethylene diisocyanate, tetramethylene diisocyanate, 1,4-cyclohexane diisocyanate, hexahydrotoluene diisocyanate, 1,5-naphthalene diisocyanate, 1-methoxy-2,4-phenylene diisocyanate, 2,4-diphenylmethane diisocyanate, 4,4'-diphenylmethane diisocyanate, 4,4'-biphenylene diisocyanate, 3,3'-dimethoxy-4,4'-biphenyl diisocyanate, 3,3'-dimethyl-4,4'-biphenyl diisocyanate, 3,3'-dimethyl-4,4'-diphenylmethane diisocyanate.

Prepolymers of polyisocyanates including those modified prior to reacting with the first component may also be employed within the scope of the invention. Especially useful due to their availability and properties are the toluene diisocyanates, 4,4'-diphenylmethane diisocyanate, 2,4'-diphenylmethane diisocyanate and polymethylene polyphenyl polyisocyanate, commonly referred to as "crude MDI". The preferred polyisocyanates can be used alone or in combinations when reacting with the polyol composition.

According to the present invention it is preferred that the one or more polyisocyanate(s) is/are selected from the group consisting of diphenylmethane diisocyanate (MDI), toluene diisocyanate (TDI), hexamethylene diisocyanate (HDI), isophoronediisocyanare (IDPI), 1,5-naphthalene diisoyanate (NDI) and prepolymers thereof.

### Catalysts

There are three general types of urethane catalysts: tertiary amines, organo-metallic compounds and salts of acids, preferably salts of weak acids, which can be used to promote the reaction of an isocyanate with an active hydrogen-containing compound. The catalysts may be active immediately or become active during the process of the reaction, for example, as a result of thermal decomposition of a catalyst precursor; such catalysts are often referred to as being blocked or delayed-action catalysts. Examples of suitable tertiary amines, used either individually or in admixture, are the N-alkylmorpholines, N-alkylalkanolamines, N,N-dialkylcyclohexylamines and alkylamines with the alkyl groups being methyl, ethyl, propyl, butyl, etc. Examples of tertiary amine catalysts useful according to the present invention are triethylamine, triethylenediamine, dimethyl benzylamine, tetramethylethylenediamine, tetramethylbutylamine, pentamethyldiethylenetriamine, tributylamine, trioctylamine, triisopropanolamine, triethanolamine, N,N,N',N'-tetramethyl-1,3-butanediamine, 2,4,6-tris (dimethylaminomethyl)phenol, N,N-dimethyl cyclohexylamine, 1,3,5-tris-(N,N-dialkylaminoalkyl)-s-hexahydrotriazines and the water adduct or alkylene oxide adduct thereof, N-alkylmorpholines such as N-ethylmorpholine and N-methylmorpholine, piperazine and piperazine derivatives such as N-methylpiperazine and N-methyl-N'-dimethylaminoethylpiperazine; imidazole derivatives such as 1,2-dimethylimidazole. Metallic compounds useful as catalysts include those of bismuth, lead, tin, titanium, iron, antimony, uranium, cadmium, cobalt, thorium, aluminum, mercury, zinc, nickel, cerium, molybdenum, vanadium, copper, manganese, zirconium, etc.

Some examples of these metal catalysts include bismuth nitrate, lead 2-ethylhexoate, lead benzoate, lead oleate, dibutyltin dilaurate, tributyltin, butyltin trichloride, stannic chloride, stannous octoate, stannous oleate, dibutyltin di(2-ethylhexoate), ferric chloride, antimony trichloride, antimony glycoxolate, tin glycoxolate, etc. Certain catalysts are known to show some selectivity towards promoting the reaction of isocyanate with water. These catalysts are known by the term urethane blowing catalysts, due to the associated generation of nascent carbon dioxide. Exemplary of such catalysts are pentamethyldiethylenetriamine-N,N-dimethyl-N-aminoethylmorpholine and bis-(N,N-dimethylaminoethyl)ether and their formate salts. An amine and organometallic compound are often used together in the polyurethane reaction, so mixtures of one or more of such catalysts can also be employed.

According to the present invention it is preferred that the one or more catalyst(s) is/are selected from the group consisting of tertiary amines, organo-metallic compounds and salts of acids.

### Blowing agents

The components described above may be employed to produce a hybrid material in the form of a polyurethane foam. Therefore, one or more blowing agent(s) may be added to the first component. Blowing agents useful in the preparation of isocyanate derived foams are well-known in the art. Suitable blowing agents include liquids or liquefied gases which generate a gas by decomposition or reaction with one or more of the components in the foaming mixture or which vaporize at or below the reaction conditions (i.e., temperature and pressure created by the exothermic reaction). In general the liquids and the liquefied gases advantageously employed are materials having a boiling point from -80 °C to 100 °C, preferably from 0 °C to 75 °C. Representative blowing agents useful herein include halogenated hydrocarbons such as tetrafluoromethane, bromotrifluoromethane, chlorotrifluoromethane, dibromodifluoromethane, dichlorodifluoromethane, trichlorofluoromethane, hexafluoroethane, 1,2,2-trichloro-1,1,2-trifluoroethane, 1,1,2,2-tetrachloro-1,2-difluoroethane, 1,2-dibromo 1,1,2,2-tetrafluoroethane, 1,2,2-tribromo-1,1,2-trifluoroethane, octafluoropropane, decafluorobutane, hexafluorocyclopropane, 1,2,3-trichloro-1,2,3-trifluorocyclopropane, octafluorocyclobutane, 1,2-dichloro-1,2,3,3,4,4-hexafluorocyclobutane, 1,2,3,4-tetrachloro-1,2,3,4-tetrafluorocyclobutane, trichloroethylene, trichloroethane, chloroform, dichloroethane, carbon tetrachloride and low boiling hydrocarbons including alkanes and alkenes such as butane, pentane, hexane, etc.

In a preferred aspect of this invention the blowing agent for the preparation of soft flexible foam is carbon dioxide generated from the reaction of isocyanate with water. The water is generally used in an amount of 1 to 10 parts by weight per 100 parts of polyol. The total amount of blowing agent used depends on the desired foam densities. The water generated carbon dioxide preferably accounts for the major portion of the blowing agent required to produce foam of the desired density. Preferably at least 50 percent, more preferably at least 60 percent and most preferably at least 75 percent of the total blowing agent requirement needed for the production of the foam is derived from the reaction of water with isocyanate to generate carbon dioxide. If necessary, the remainder of the blowing agent requirement for the production of the foam can be provided by one or more of the suitable blowing agents listed. Preferred supplementary blowing agents are chlorofluorocarbons.

In a preferred aspect of the present invention the first component additionally comprises water.

### Surfactants

The first component may also contain a surfactant or stabilizer or other cell size control agents. Such materials are well-known in the art. In general, representatives of foam surfactants are alkoxysilanes, polysilylphosphonates, polydimethylsiloxanes, the condensates of ethylene oxide with a hydrophobic base formed by condensing propylene oxide with propylene glycol, the alkylene oxide adducts of ethylenediamine, the polyoxyalkylene esters of long chain fatty acids and sorbitan, and (siloxaneoxyalkylene) block copolymers.

In a preferred aspect of the present invention the one or more surfactant(s) is/are selected from the group consisting of polydimethylsiloxanes and (siloxaneoxyalkylene) block copolymers.

### Additives

In addition to the previously described components, the first component can optionally contain any of a variety of additives commonly employed in the preparation of flexible urethane foams. Representatives include fire-retardant agents, fillers, dyes, pigments, anti-oxidizing agents, fungicides and the like. Cross-linkers and chain extenders used to modify foam properties can also be incorporated in the reacting mixture. Representative cross-linkers are glycerol and trifunctional isocyanates. Representative chain extenders are ethylenglycol, 1,4-butaneglycol, hydroquinone and Bisphenol A.

In a preferred aspect of the present invention, the first component additionally comprises one or more compounds selected from the group consisting of chain extenders, cross linkers, surfactants and catalysts.

In a further preferred aspect of the present invention the one or more chain extender(s) is/are selected from the group consisting of ethylenglycol, 1,4 butaneglycol, hydroquinone and Bisphenol A.

In yet a further preferred aspect of the present invention wherein the one or more cross linker(s) is/are selected from the group consisting of glycerol and trifunctional isocyanates.

According to a preferred aspect of the present invention, the reactive composition of step c. consists of a polyol, a polyisocyanate, a surfactant and a dilatant, wherein the dilatant comprises at least in part one or more amine group(s).

### Preparation

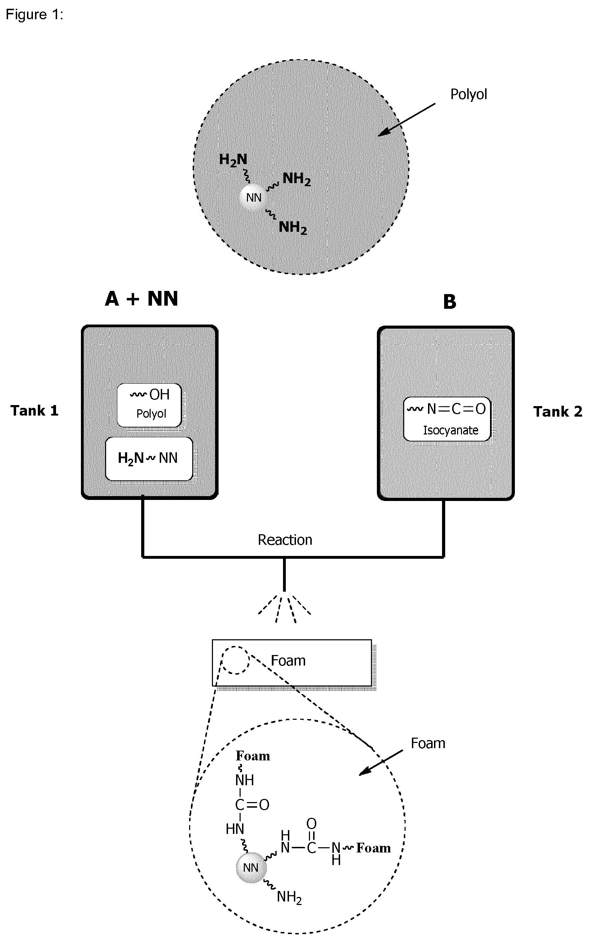

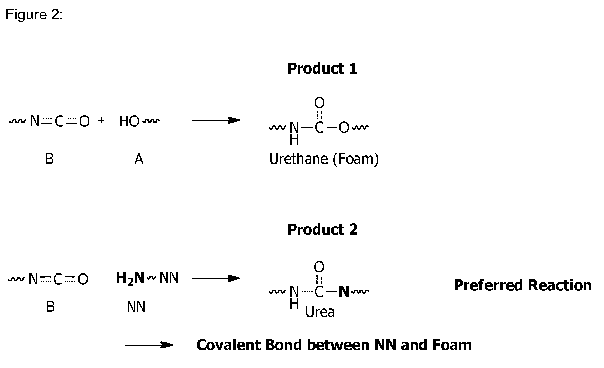

The preparation of a hybrid material according to the present invention is exemplary illustrated by means of Figures 1 and 2.

The components described above may be employed to produce a hybrid material in the form of a polyurethane foam. The first component comprising one or more polyol(s), one or more dilatant(s) and water, wherein the one or more dilatant(s) comprises at least in part one or amine group(s), is reacted with the second component comprising one or more polyisocyanate(s).

The polyurethane foam may be prepared in a one-step process by reacting all the ingredients together at once or can be made by the so-called "quasi-prepolymer method". In the one-shot process, where foaming is carried out in machines, the active hydrogen-containing products, catalysts, surfactants, blowing agents and optional additives may be introduced through separate pipes to the mixing head where they are combined with the polyisocyanate to give the polyurethane-forming mixture. The mixture may be poured or injected into a suitable container or mold as requsired. For use of machines with a limited number of component lines into the mixing head, a premix of all the ingredients except the polyisocyanate to give the first component, can be advantageously employed. This simplifies the metering and mixing of the first component with the second component at the time the reactive composition is prepared.

According to a preferred aspect of the present invention, after step c. and prior to step d. the reactive composition is injected into a mold.

Alternatively, the foam may be prepared by the so-called "quasi-prepolymer method". In this method a portion of the polyol is reacted in the absence of catalysts with a portion of the polyisocyanate so as to provide from about 10 percent to about 30 percent of free isocyanate groups in the reaction product based on the weight of prepolymer. To prepare foam, the remaining portion of the polyol is added and all components are allowed to react together in the presence of catalysts and other appropriate additives such as blowing agent, surfactant, etc. Other additives may be added to either the prepolymer or remaining polyol or both prior to the mixing of the components, whereby at the end of the reaction a polyurethane foam is provided.

The product (cured foam) is a hybrid material (statistic co-polymer): the reaction of a polyisocyanate with a polyol forms a urethane linkage, and the reaction of a polyisocyanate with a dilatant comprising at least in part one or more amine group(s) forms a urea linkage.

According to a further aspect of the present invention a hybrid material is provided obtained or obtainable according to the method described above or preferred embodiments thereof.

According to an even further aspect of the present invention an impact protection is provided comprising or consisting of one or more hybrid material(s) described above.

In another aspect of the present invention an object is provided comprising one or more impact protection(s) as described above, wherein the object is selected from the group consisting of devices of consumer electronics or parts thereof, in particular mobile devices such as mobile phones, tablets and notebooks, screenshields, electronic casing solutions, gaskets and protective inlays for electronic casings, protective parts and bumpers for devices and goods, electronics, personal protective gear and wear such as protectors, helmet pads, passenger protection in automotive, inlays for protective caps, transportation systems for critical goods.

The process according to the invention is illustrated, but not intended to be limited, by the following experiments. Unless otherwise specified, all quantities are in parts by weight.

### In case of TPU

The amine containing dilatant material is in a pre-crosslinked, low viscous form. To ensure a controlled crosslinking an inhibitor is incorporated. During a TPU extrusion process the dilatant material is added via sidefeeder. In this process the inhibitor is removed in a vacuum zone and an *in situ* crosslinking is taking place. The amine groups of the dilatants react with the isocyante groups of the TPU to form the hybrid material. Preferably, the TPU contains an excess of accessible isocyanate groups relative to the amine groups of the dilatant.

From the wide range of known TPU systems, the most common systems are based on hard segments, which result from chemical reaction of butane diol and MDI, and elastic soft segments, which are based on a long-chain diol, preferably a polyester diol, a polyether diol derived from THF, ethylene glycol or propylene glycol.

### In case of PU

The amine containing dilatant material is in a pre-crosslinked, low viscous form. To ensure a controlled crosslinking an inhibitor is incorporated. In a PU reaction injection molding process the dilatant material is pumped and dispersed into the polyol part of the system. The presence of the inhibitor prevents an early crosslinking and thus maintains a low viscosity which is essential for a fine and homogenous dispersion of the dilatant in the polyol. Just before the reaction with the isocyanate component the inhibitor is removed in a vacuum zone. During the reaction injection process the amine groups of the dilatant react with the isocyante prior the polyol component to form the hybrid material.

### Preparation of hybrid material

Silanol terminated polydimethylsiloxane having a viscosity of 880 centiStokes and 3-Aminopropylmethyldiethoxysilane were obtained from ABCR Dr. Braunagel GmbH & Co. KG, D-76187 Karlsruhe:

### Example 1 - TPU

The following example describes the melt synthesis of the new hybrid material made from a reactive TPU blend and an amino functionalized pre-crosslinked silicone based dilatants.

For the melt synthesis a Brabender W 50 E - 3 zones measuring mixer was used. As a reactive TPU DESMOPAN 3787 A (Bayer MaterialScience, Germany) was used. This TPU has an excess of accessible isocyanate groups which are free for reaction during melt synthesis. The reaction temperature in the mixing chamber of the mixer was set to 200 °C. 49.5g of DESMOPAN 3787 A were added into the mixing chamber. After one minute of mixing a decrease in the torque of the measuring mixer was observed, this indicated a sufficient melt viscosity. 5.5g of a pre-crosslinked reactive mixture of alpha, omega-hydroxy-terminated polydimethylsiloxane, 3-aminopropylmethyldiethoxysilane, boric acid and ethanol as an inhibitor were added to the melt. Due to the reaction temperature the ethanol was evaporated instantly and allowed an *in situ* crosslinking of the amino functionalized silicone based dilatants material and a reaction with the TPU to form the hybrid material. At the beginning of the reaction an increase of the torque was observed. The melt was mixed for additional nine minutes. During this time the torque decreases slowly until it reached a constant level after approximately five minutes. After reaction the hybrid material was removed with a wooden spatula from the mixing chamber.

### Example 2 - PU Foam

The following example shows the manufacturing of a hybrid material made of polyurethane and a dilatant with amine groups.

The used PU is a two component system. Bayfit 57-112 was used as part A and Desomodur PC-N as part B. Both were purchased from Bayer MaterialScience, Germany. Part A and B are normally mixed in the ration of 100:47. To ensure enough isocyanate groups for the reaction with the amine groups and the polyol the ratio between part A and part B is shifted to 100:53. 10g of Bayfit 57-112 were placed in a falcontube and 1.47g of a mixture of alpha, omega-hydroxy-terminated polydimethylsiloxane, 3-aminopropylmethyldiethoxysilane, boric acid and ethanol as an inhibitor were added. The mixture was stirred with an ultraturrax for five minutes. In vacuum ethanol was removed. 5.3g of Desomodur PC-N were added and the mixture was intensively mixed with a wooden spatula. The hybrid material was poured into a Teflon mold.

## Claims

1. Method for producing a hybrid material (copolymer) comprising or consisting of the following steps:
a. providing a first component comprising or consisting of one or more polyol(s) and one or more dilatants(s), wherein the one or more dilatants(s) comprises at least in part one or more amine group(s);
b. providing a second component comprising one or more polyisocyanate(s);
c. mixing the first and the second component to yield a reactive composition;
d. curing the reactive composition to obtain the hybrid material.

2. The method according to claim 1, wherein the first component additionally comprises water.

3. The method according to any of the preceding claims, wherein the one or more polyol(s) is/are selected from the group consisting of polyester polyols, polyether polyols and hydroxyl-functionalized polyacrylates.

4. The method according to any of the preceding claims, wherein the one or more polyisocyanate(s) is/are selected from the group consisting of diphenylmethane diisocyanate (MDI), toluene diisocyanate (TDI), hexamethylene diisocyanate (HDI), isophoronediisocyanate (IDPI), 1,5-naphthalene diisoyanate (NDI) and prepolymers thereof.

5. The method according to any of the preceding claims, wherein the first component additionally comprises one or more compounds selected from the group consisting of chain extenders, cross linkers, surfactants and catalysts.

6. The method according to claim 5, wherein the one or more chain extender(s) is/are selected from the group consisting of ethylenglycol, 1,4-butaneglycol, hydroquinone and Bisphenol A.

7. The method according to any of claims 5 to 6, wherein the one or more cross linker(s) is/are selected from the group consisting of glycerol and trifunctional isocyanates.

8. The method according to any of claims 5 to 7, wherein the one or more surfactant(s) is/are selected from the group consisting of polydimethylsiloxanes and (siloxaneoxyalkylene) block copolymers.

9. The method according to any of claims 5 to 8, wherein the one or more catalyst(s) is/are selected from the group consisting of tertiary amines, organo-metallic compounds and salts of acids.

10. The method according to any of the preceding claims, wherein the molar ratio between polyol(s) and dilatants(s) in step a. is within the range of 9 to 1, more preferably within the range of 3 to 1.

11. The method according to any of the preceding claims, wherein the reactive composition of step c. consists of:
- a polyol,
- a polyisocyanate,
- a surfactant and
- a dilatant, wherein the dilatant comprises at least in part one or more amine group(s).

12. The method according to any of the preceding claims, wherein after step c. and prior to step d. the reactive composition is injected into a mold.

13. Hybrid material obtained or obtainable according to any of claims 1 to 12.

14. Impact protection comprising or consisting of one or more one hybrid material(s) according to claim 13.

15. Object comprising one or more impact protection(s) according to claim 14, wherein the object is selected from the group consisting of devices of consumer electronics or parts thereof, in particular mobile devices such as mobile phones, tablets and notebooks, screenshields, electronic casing solutions, gaskets and protective inlays for electronic casings, protective parts and bumpers for devices and goods, electronics, personal protective gear and wear such as protectors, helmet pads, passenger protection in automotive, inlays for protective caps, transportation systems for critical goods.

## Patentansprüche

1. Verfahren zur Herstellung eines Hybridmaterials (Copolymer), welches die folgenden Schritte umfasst:
a. Bereitstellung einer ersten Komponente, welche ein oder mehrere Polyole und ein oder mehrere dilatante Materialien aufweist oder aus diesen besteht, wobei das eine oder die mehreren dilitanten Materialien zumindest teilweise eine oder mehrere Amingruppen aufweist/ aufweisen;
b. Bereitstellung einer zweiten Komponente, welche ein oder mehrere Polyisocyanate umfasst;
c. Mischen der ersten und zweiten Komponente zur Gewinnung einer reaktiven Zusammensetzung;
d. Härten der reaktiven Zusammensetzung zum Erhalt des Hybridmaterials.

2. Verfahren nach Anspruch 1, wobei die erste Komponente zusätzlich Wasser aufweist.

3. Verfahren nach einem der vorhergehenden Ansprüche, wobei das eine oder die mehreren Polyole aus der Gruppe bestehend aus Polyester-Polyolen, PolyetherPolyolen und Hydroxyl-funktionalisierten Polyacrylaten ausgewählt wird/werden.

4. Verfahren nach einem der vorhergehenden Ansprüche, wobei das eine oder die mehreren Polyisocyanate aus der Gruppe bestehend aus Diphenylmethan-Diisocyanat (MDI), Toluol-Diisocyanat (TDI), Hexamethylen-Diisocyanat (HDI), IsophoronDiisocyanat (IDP), 1,5-Naphthalin-Diisocyanat (NDI) und Vorpolymeren davon ausgewählt wird/werden.

5. Verfahren nach einem der vorhergehenden Ansprüche, wobei die erste Komponente zusätzlich eine oder mehrere Verbindungen aufweist, welche aus der Gruppe bestehend aus Kettenverlängerern, Vernetzern, Tensiden und Katalysatoren ausgewählt wird/werden.

6. Verfahren nach Anspruch 5, wobei der eine oder die mehreren Ketternverlängerer aus der Gruppe bestehend aus Ethylenglycol, 1,4-Butanglycol, Hydrochinon und Bisphenol A ausgewählt wird/werden.

7. Verfahren nach einem der Ansprüche 5 bis 6, wobei der eine oder die mehreren Vernetzer aus der Gruppe bestehend aus Glycerin und trifunktionalen Isocyanaten ausgewählt wird/werden.

8. Verfahren nach einem der Ansprüche 5 bis 7, wobei das eine oder die mehreren Tenside aus der Gruppe bestehend aus Polydimethylsiloxanen und (Siloxanoxyalkylen) Block-Copolymeren ausgewählt wird/werden.

9. Verfahren nach einem der Ansprüche 5 bis 8, wobei der eine oder die mehreren Katalysatoren aus der Gruppe bestehend aus tertiären Aminen, metallorganischen Verbindungen und Salzen von Säuren ausgewählt wird/werden.

10. Verfahren nach einem der vorhergehenden Ansprüche, wobei das Molverhältnis zwischen Polyol(en) und dilatantem Material in Schritt a. im Bereich von 9 bis 1 liegt, bevorzugt im Bereich von 3 bis 1.

11. Verfahren nach einem der vorhergehenden Ansprüche, wobei die reaktive Zusammensetzung aus Schritt c aus den folgenden Materialien besteht:
- einem Polyol,
- einem Polyisocyanat,
- einem Tensid und
- einem dilatanten Material, wobei das dilatante Material zumindest teilweise eine oder mehrere Amingruppen umfasst.

12. Verfahren nach einem der vorhergehenden Ansprüche, wobei nach Schritt c. und vor Schritt d. die reaktive Zusammensetzung in eine Form gespritzt wird.

13. Hybridmaterial, welches gemäß einem der Ansprüche 1 bis 12 erhalten wird oder erhalten werden kann.

14. Aufprall- bzw. Stoßschutz, welcher ein oder mehrere Hybridmaterialien nach Anspruch 13 umfasst oder aus diesen besteht.

15. Gegenstand, welcher eine oder mehrere Aufprall- bzw. Stoßschutzeinrichtungen nach Anspruch 14 umfasst, wobei der Gegenstand aus der Gruppe bestehend aus Geräten der Verbraucherelektronik und Teilen davon, insbesondere mobilen Geräten wie beispielsweise Mobiltelefonen, Tablet-Computern und Notebooks, Bildschirmschutz, Elektronikgehäuse-Lösungen, Dichtungen und Schutzeinlagen für Elektronikgehäuse, Schutzbauteilen und Puffern bzw. Stoßleisten für Geräte und Artikel, Elektronik, persönlicher Schutzausrüstung und Schutzkleidung wie beispielsweise Protektoren, Helmpolster, Insassenschutz in Fahrzeugen, Einlagen für Schutzkappen, Transportsystemen für kritische Güter ausgewählt wird.

## Revendications

1. Procédé de fabrication d'un matériau hybride (copolymère) comprenant ou consistant en les étapes suivantes :
a. fournir un premier composant comprenant ou consistant en un ou plusieurs polyols et un ou plusieurs agents de dilatation, dans lequel les uns ou plusieurs agents de dilatation comprennent au moins en partie un ou plusieurs groupes amine ;
b. fournir un second composant comprenant un ou plusieurs polyisocyanates ;
c. mélanger le premier et le deuxième composant pour obtenir une composition réactive ;
d. durcir la composition réactive pour obtenir le matériau hybride.

2. Procédé selon la revendication 1, dans lequel le premier composant comprend en outre de l'eau.

3. Procédé selon l'une quelconque des revendications précédentes, dans lequel les un ou plusieurs polyols est/sont choisis dans le groupe constitué par des polyester-polyols, des polyéther-polyols et des polyacrylates hydroxy-fonctionnalisés.

4. Procédé selon l'une quelconque des revendications précédentes, dans lequel les uns ou plusieurs polyisocyanates est/sont choisis dans le groupe constitué par le diisocyanate de diphénylméthane (MDI), le diisocyanate de toluène (TDI), le diisocyanate d'hexaméthylène (HDI), le diisocyanate d'isophorone (IDPI), le diisocyanate de 1,5-naphtalène (NDI,) et des prépolymères de ceux-ci.

5. Procédé selon l'une quelconque des revendications précédentes, dans lequel le premier composant comprend en outre un ou plusieurs composés choisis dans le groupe constitué d'agents d'allongement de chaîne, d'agents de réticulation, d'agents tensioactifs et de catalyseurs.

6. Procédé selon la revendication 5, dans lequel les uns ou plusieurs agents d'allongement de chaîne sont choisis dans le groupe constitué par l'éthylène glycol, le 1, 4-butaneglycol, l'hydroquinone et le Bisphénol A.

7. Procédé selon l'une quelconque des revendications 5 à 6, dans lequel les uns ou plusieurs agents de réticulation sont choisis dans le groupe constitué par du glycérol et des isocyanates trifonctionnels.

8. Procédé selon l'une quelconque des revendications 5 à 7, dans lequel les uns ou plusieurs agents tensioactifs sont choisis dans le groupe constitué par des polydiméthylsiloxanes et des copolymères blocs (siloxaneoxyalkylène).

9. Procédé selon l'une quelconque des revendications 5 à 8, dans lequel les uns ou plusieurs catalyseurs sont choisis dans le groupe constitué par des amines tertiaires, des composés organo-métalliques et des sels d'acides.

10. Procédé selon l'une quelconque des revendications précédentes, dans lequel le rapport molaire entre le ou les polyols) et le ou les agents de dilatation dans l'étape a. est dans la plage de 9 à 1, de manière plus préférée dans la plage de 3 à 1.

11. Procédé selon l'une quelconque des revendications précédentes, dans lequel la composition réactive de l'étape c. consiste en :
- un polyol,
- un polyisocyanate,
- un agent tensioactif, et
- un agent de dilatation, dans lequel l'agent de dilatation comprend au moins en partie un ou plusieurs groupes amine.

12. Procédé selon l'une quelconque des revendications précédentes, dans lequel après l'étape c. et avant l'étape d., la composition réactive est injectée dans un moule.

13. Matériau hybride obtenu ou pouvant être obtenu selon l'une quelconque des revendications 1 à 12.

14. Protection contre les chocs comprenant ou consistant en un ou plusieurs matériaux hybrides selon la revendication 13.

15. Objet comprenant une ou plusieurs protections contre les chocs selon la revendication 14, dans lequel l'objet est sélectionné dans le groupe constitué de dispositifs d'électronique grand public ou de parties de ceux-ci, en particulier les appareils mobiles tels que les téléphones mobiles, des tablettes et des ordinateurs portables, protège-écrans, des solutions de boîtier électronique, des joints et des incrustations de protection pour des boîtiers électroniques, des pièces de protection et des pare-chocs pour des appareils et des produits, des éléments électroniques, un équipement de protection personnelle et contre l'usure tels que des protecteurs, des rembourrages de casque, des protections pour les passagers dans une automobile, des incrustations pour des capuchons de protection, des systèmes de transport pour des marchandises critiques.
